# EUROPEAN PATENT APPLICATION

(11) **EP 1 114 797 A1**
(43) Date of publication of application: **11.07.2001**
(21) Application number: 00200015.6
(22) Date of filing: 05.01.2000
(51) Int. Cl.: C02F 3/12

(54) **Device for the purification of waste water.**

(71) Applicant: Sirius B.V., 8265 CK Kampen (NL); Waterschap Groot Salland, 8025 AL Zwolle (NL)
(72) Inventor: de Vries, Anthonie Cornelis, 8265 CK Kampen (NL); van Faassen, Engbert, 8265 CK Kampen (NL)
(74) Representative: Ferguson, Alexander

(57) **Abstract**

Device for the purification of waste water, comprising a number of tanks, situated within the circumferential wall of the device and separated from each other by preferably substantially circular circumferential walls, the first tank (10) being adapted as anaerobic reactor in which the waste water is mixed with anoxic sludge, a second tank (11) being adapted as contact reactor in which sludge water mixture originating from the anaerobic reactor is mixed with return sludge, and a third tank (13) being adapted as anoxic reactor in which the sludge water mixture is mixed with nitrate sludge, the device further comprising first passage means (44) for supply of waste water to the anaerobic reactor, second passage means for discharge of phosphate-rich water from the anaerobic reactor, third passage means (45) for transferring the sludge water mixture from the anaerobic reactor (10) to the contact reactor (11), fourth passage means (23) for transferring sludge water mixture from the contact reactor (11) to the anoxic reactor (12), fifth passage means (87) for transferring anoxic sludge from the anoxic reactor (12) to the anaerobic reactor (10), the device further comprising a fourth tank (8) within the circumferential wall which tank is adapted as oxic or aerobic reactor in which among others, while aerating, nitrate compounds in the sludge water mixture originating from the anoxic reactor are converted into nitrate, the device further comprising sixth passage means (24-28) for transferring sludge water mixture from the anoxic reactor to the oxic reactor, the sixth passage means being substantially accommodated within the circumferential wall of the device.

## Description

The invention relates to a device for the purification of waste water.

Such a device is known from Dutch patent application 1.001157. Said known device, in practice also known as AKAS reactor, comprises a central cylindrical inner tank, which serves as sludge thickener, and three concentric annular sub tanks surrounding it, namely an anaerobic reactor, in which the waste water is mixed with anoxic sludge, a contact reactor, in which the sludge water mixture originating from the anaerobic reactor is mixed with return sludge, and an anoxic reactor, in which the sludge water mixture is mixed with nitrate-rich sludge, the device further comprising first passage means for possible supply of waste water from a reception pit to the anaerobic reactor, (possibly) second passage means for possible discharge of phosphate-rich water from the anaerobic reactor to the central sludge thickener, third passage means for transferring the sludge water mixture from the anaerobic reactor to the contact reactor, fourth passage means for transferring sludge water mixture from the contact reactor to the anoxic reactor and fifth passage means for transferring anoxic sludge from the anoxic reactor to the anaerobic reactor. From the anoxic reactor a conduit directly or indirectly leads to a separate device which is adapted as oxic reactor, in which -while introducing oxygen- nitrogen compounds are converted into nitrate. A drawback of this arrangement is that the occupation of space is large and that many constructional provisions, in the form of walls and conduits, are necessary. Moreover the location of the oxic reactor in vertical sense has to be such that the sludge water mixture can flow freely to it -which requires the necessary constructional provisions-, or otherwise to use a pump.

A main object of an invention is to provide a device substantially of the kind mentioned above which is an improvement on these points.

To that end according to the invention -from one aspect- a device is provided for the purification of waste water, comprising a number of tanks, situated within the circumferential wall of the device and separated from each other by preferably substantially circular circumferential walls, the first tank being adapted as anaerobic reactor, in which the waste water is mixed with anoxic sludge, a second tank being adapted as contact reactor in which sludge water mixture originating from the anaerobic reactor is mixed with return sludge, and a third tank being adapted as anoxic reactor in which the sludge water mixture is mixed with nitrate-rich sludge, the device further comprising first passage means for supply of waste water to the anaerobic reactor, possibly second passage means for discharge of phosphate-rich water from the anaerobic reactor, third passage means for transferring the sludge water mixture from the anaerobic reactor to the contact reactor, fourth passage means for transferring sludge water mixture from the contact reactor to the anoxic reactor, fifth passage means for transferring anoxic sludge from the anoxic reactor to the anaerobic reactor, the device further comprising a fourth tank within the circumferential wall which tank is adapted as oxic or aerobic reactor in which among others, while aerating, nitrogen compounds in the sludge water mixture originating from the anoxic reactor are converted into nitrate, the device further comprising sixth passage means for transferring sludge water mixture from the anoxic reactor to the oxic reactor, the sixth passage means being substantially accommodated within the circumferential wall of the device.

Thus a very compact device is provided in which the largest part of the waste water purification process can take place, namely successively an anaerobic, anoxic and oxic treatment. Both the liquid conduits and the operation conduits/cables can be kept short here.

Preferably the device further comprises seventh passage means for transporting nitrate-rich sludge from the oxic reactor to the anoxic reactor, which are substantially accommodated within the circumferential wall of the device. Because of the proximity of the oxic reactor a relatively short conduit will suffice here, in order to comply with the desired circulation time.

Preferably the oxic reactor is situated at the circumference of the device. Thus the circumferential length of the device is used, as a result of which the width of the oxic reactor at a same flow rate can be kept within limits, in order to comply with the desired circulation time.

Often an external anoxic/oxic reactor -also called selector reactor- will be placed in between the anoxic reactor and the oxic reactor, which when desired may serve as anoxic reactor (in which denitrification takes place) or as oxic reactor (in which, while adding air, nitrogen compounds are converted into nitrate). The selector reactor is operated oxic when there are peak loads and the oxic reactor is unable to offer sufficient oxygen.

In a further development of the device according to the invention the sixth passage means comprise a fifth reactor, which is circuited between the anoxic reactor and the oxic reactor and as selector reactor can be deployed at choice as anoxic or oxic reactor.

Thus another reactor is housed within one and the same device, as a result of which constructions and conduits can further be saved on, as well as on the occupation of space, while moreover further hydraulic optimization takes place in this way.

Preferably the device further comprises eighth passage means for transporting nitrate-rich sludge from the oxic reactor to the selector reactor. Because of the proximity of the oxic reactor and the selector reactor a conduit can be dispensed with here.

Preferably a vortex pit is accommodated in the bottom of the selector reactor, in which pit the sludge water mixture originating from the anoxic reactor is mixed with nitrate-rich sludge originating from the oxic reactor.

Preferably the selector reactor is situated at the radial inside of the oxic reactor and is in connection therewith at free hydraulic drop. The sludge water mixture then flows in an outward direction to the latter reactor, as a result of which the parallelism of a conduit for sludge water mixture from the anoxic reactor to the selector reactor with a conduit for the mixture of the oxic reactor to an (external) resettling tank (and expensive constructional provisions this entails) is prevented, and the latter conduit can be kept as short as possible, in order to comply with the desired circulation time.

It is noted that from Dutch patent specification 1003470 a so-called selector reactor is known which comprises both an aerating device and one or several propulsion devices, which can be activated independently from the aerating device. Said known reactor however consists of one single tank in which only one sub process can be carried out. Because said known selector reactor is cylindrical the water to be purified has to be stilled in vertical direction in the centre of the tank in order to prevent that the water comes to a standstill in the centre of the tank. The reactor according to the invention does not show these drawbacks. Because the selector reactor is annular no swirling occurs and there are no parts of the sub tank in which the water may come to a standstill and circulation can take place in a controlled manner without special means.

In a compact preferred embodiment the anaerobic reactor, the contact reactor and the anoxic reactor succeed each other in radial inward direction, the selector reactor being radially outward adjacent to the anaerobic reactor and the oxic reactor being adjacent thereto in radial outward direction, the first, third, fourth and sixth passage means being active at free hydraulic drop. The outer wall of the device then has to turn the lowest liquid level.

In a further development the device according to the invention further comprises a sixth tank which is adapted as sludge thickener and is connected to the second passage means. The sludge thickener preferably is situated in the centre of the device, in radial inward direction next to the anoxic reactor and being connected thereto via an overflow for sludge-settled phosphate-poor water.

Preferably the contact reactor is provided with a supply and mixing bowl in which the sludge water mixture originating from the anaerobic reactor is mixed with return sludge originating from a resettling tank.

In various sub processes gasses are released. Said gasses, which particularly arise in the reception pit where the sewage water is stripped of the crudest dirt, the anaerobic reactor, the contact reactor and the sludge thickener, may cause stench. It is known to cover these spaces in order to limit the emission of smells, and to lead these gasses through lava and/or compost filters. These filters, however, are costly.

From another aspect the invention provides an on this point improved device for the purification of waste water, the tanks producing gas, such as for instance an anaerobic reactor, a contact reactor an added reception pit, and the sludge thickener -when present- being covered and provided with means for suctioning the gasses formed there, the device further being provided with aeration means for the aerobic or oxic sub processes, which aeration means are at least partially in connection to the gas suctioning means.

In other words, the invention provides a device for the purification of waste water which may or may not have been subjected to a pre-treatment, in which gasses released in one or more sub processes are collected and used as means for stilling the liquid mixture in one or several sub processes in the purification process and/or a device for the purification of waste water which may or may not have been subjected to a pre-treatment, in which gasses released in one or more sub processes are collected and introduced in the sludge water mixture in order to have these gasses absorbed by the sludge flakes, in particular in one or several aerobic or oxic sub processes in the purification process.

Thus gas is used for aerating and possibly for stilling the liquid to be purified, and the gasses will be absorbed by the sludge flakes, so that no expensive filters are required.

Preferably the tanks for the sub processes of which the gasses are collected, are covered.

For the process in a reactor of a water purification plant it may be necessary to separate a light component from a heavy component. This for instance has to take place in an anaerobic reactor, in which the waste water is mixed with anoxic sludge originating from an anoxic reactor and phosphate bacteria release phosphate to the water under anaerobic conditions. As a result an increased concentration of phosphate-rich water is created. To promote the further purification process in the circulating sludge water mixture, it is desirable to partly discharge the phosphate-rich water formed, to a sludge thickener. To that end in the aforementioned AKAS reactor a flow shielded zone is formed with the help of cross partitions hanging down in the flow path, in which zone the inlet of a discharge conduit for the phosphate-rich water extends. It appeared however, that a sufficient discharge of sludge free, phosphate-rich water can only be properly attained at low flow velocities and as a result low flow rates in the reactor.

The invention has the further object to improve on this.

From a next aspect the invention to that end provides a device for the purification and separation of waste water into at least two components, comprising a main channel -preferably adapted as an anaerobic reactor-having an inlet for the waste water to be purified, a first outlet for a first, relatively heavy component (such as the sludge-water mixture), and a second outlet for a second relatively light component (such as phosphate-rich water without sludge), as well as means for letting the waste water flow through the channel for the separation thereof into said components, further comprising a sub channel which is at least separated from the main channel by means of a circumferential wall and which is provided with an inlet for the liquid present in the channel and with the second outlet.

Thus upstream of and in the vicinity of the discharge for the light sludge-free component an area of different, more quiet flow conditions is created, as a result of which separation takes place there between the components, in particular the sludge water mixture and the sludge-free phosphate-rich water. As a result, the discharge is improved and moreover the velocity in the ongoing main process can be kept at the level desirable for it.

Preferably the sub channel is provided with an open bottom which is situated at vertical distance from the bottom of the channel. As a result the sludge which ends up with the water in the sub channel can deposit/flow back to the main channel. It may not even be necessary anymore to choose such a low rate of flow in the tank/main channel so that in the upper area phosphate-rich water is collected: the separation may even take place in the sub channel, as a result of which the rate of flow in the main channel can be adjusted high.

Preferably the sub channel is provided with a number of laminations which in between them determine downward flow apertures. Because of the laminations or shutters a downward flow is divided, so that the flow pattern becomes less turbulent, which promotes the settling of sludge particles.

Preferably the laminations are arranged for -preferably joint- adjustment of their gradient with respect to the vertical. As a result the circulation surface between the laminations can be adjusted.

The inlet of the sub channel can be situated near the water surface. Alternatively (or selectively) the inlet can however be situated near the bottom of the channel, so that possible better settling properties of the sludge water-in lower areas of the main channel can be used.

Preferably the sub channel has a substantially funnel-shaped cross-section, as a result of which the depositing of the sludge particles is promoted. The sub channel then preferably has a straight lower outflow, in which the laminations are arranged.

From another aspect the invention to that end provides a method for the purification and separation of waste water into at least two components, in which waste water and anoxic sludge water are brought together in a main channel, are mixed together, the mixture is flowed through the main channel at a first rate of flow, during which process phosphates stored by bacteria are released, after which a light component, formed by phosphate-rich water, and a heavy component, formed by sludge water, are separated from the mixture, and are led to further channels for separate further treatment, the mixture being led into a sub channel shielded from the main channel upstream of a discharge for phosphate-rich water, in which sub channel the flow is adjusted at a second rate of flow which is low to such an extent that sludge from the mixture can settle, after which the settling sludge is supplied again to the main channel and the phosphate rich water is discharged. Preferably the sludge is flowed through the bottom of the sub channel in the main channel, during which little more mixture is being supplied to the sub channel than phosphate rich water is being discharged.

Preferably the sludge is lowered through vertical passages which are bounded by laminations, in which preferably the laminations are adjusted at an angle with respect to the vertical in order to adjust the size of the passage in between them.

Preferably the mixture is tapped in the lower part of the main channel for supply to the sub channel.

From yet another aspect the invention provides a device for the purification of waste water, which device comprises a number of tanks, each tank serving for a certain step in the purification process, the tanks being formed by a circumferential, for instance cylindrical, outer wall, which encloses a space which is divided into several annular spaces and a central cylindrical space by one of more concentric inner walls, one of the annular spaces comprising both an aeration device and one or several propulsion devices, which propulsion devices can be activated independent from the aeration device.

Preferably the outer annular sub tank is provided with a bubble aeration system and can be operated as an oxic reactor.

Preferably the flow directions are reversed in tanks that are successive in process direction, in order to further disturb the liquid flow and generate vortexes.

With these measures it is achieved that a compact, hydraulic and constructional optimized purification device is obtained, in which waste water can be purified with the help of bacteria which thrive both in oxic, anoxic and in anaerobic surroundings and amongst others remove BOD, COP, nitrogen and phosphate, in the process.

From another aspect one of the above-mentioned type is provided, in which one of the annular sub spaces forms an anaerobic sub tank in which at the upper side radial vertical partitions are arranged which are substantially transverse to the direction of circulation of the sludge water in the sub tank, which partitions are provided with adjustable guiding elements for placing the partitions at an angle.

From yet another aspect the application provides a device for the purification of waste water, which device comprises a number of tanks each tank serving for a certain step in the purification process, the tanks being formed by a circumferential, for instance cylindrical, outer wall, which encloses a space, which is divided into several annular spaces and a central cylindrical space by one of more concentric inner walls, in which for at least one of the annular spaces the inlet is situated upstream of the discharge. In this way the path to be followed by the sludge water mixture in the space concerned is made as long as possible (over 360°), and thus the time spent there.

This can be realized in a simple way and without costly measures when the inlet and the outlet are situated vertical at a distance from each other.

It is preferred then that said space is adapted as anoxic reactor and is provided with an inlet for sludge water mixture originating from a contact space, and with an outlet for the discharge of the sludge water mixture from the anoxic reactor.

The inventions will be further elucidated on the basis of the drawings, in which:
Figure 1 shows a perspective view of a device according to the invention;
Figure 2 shows the device of figure 1 in top view, with a detail on enlarged scale in figure 2A;
Figure 3 shows a cross-section of the device of the figures 1 and 2;
Figure 4 shows a cross-section according to line IV-IV of figure 3;
Figure 5 shows a flow chart of the water management of the device of the preceding figures; and
Figure 6 and 7 show a longitudinal section and a cross-section of a two-stage separator for use in the device according to the invention, respectively.

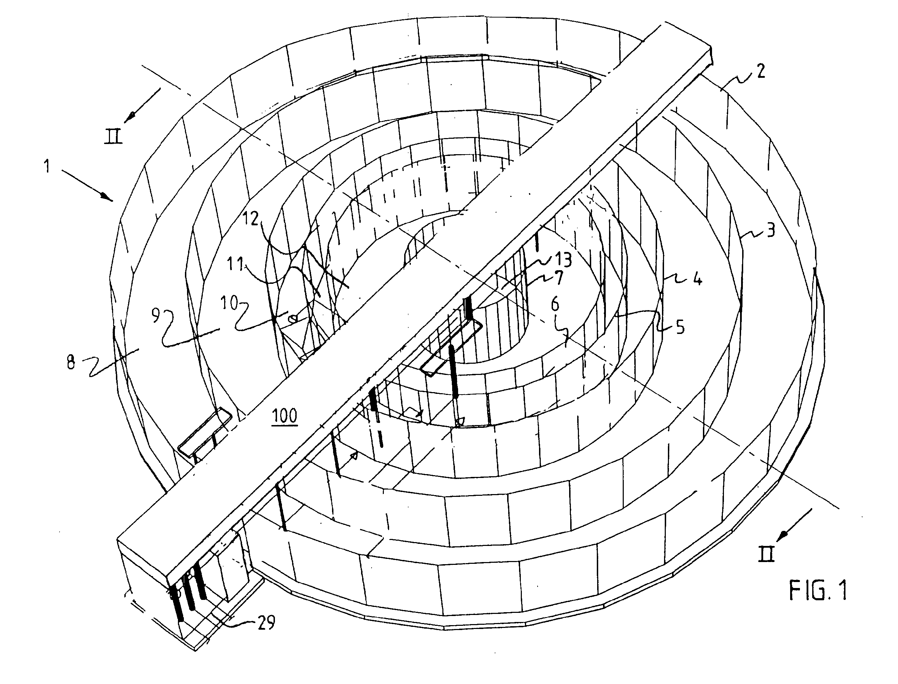

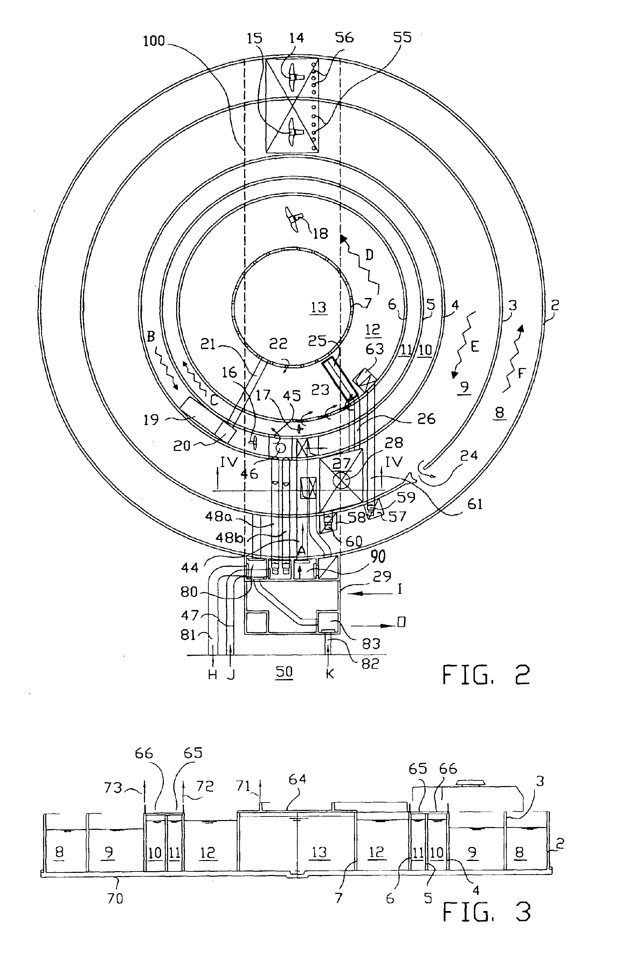

In figure 1 an exemplary embodiment of a reactor 1 according to the invention is shown. The reactor 1 consists of a cylindrical outer wall 2 which encloses a space which is divided into five annular tanks 8, 9, 10, 11, 12 and a central cylindrical tank 13 by five cylindrical, concentric inner walls 3, 4, 5, 6, 7. To the outer side of the wall 2 a reception pit 29 is built and furthermore a resettling tank 50 is situated at the outer side -at some distance-. A walking bridge 100 extends over the reactor 1.

Waste water coming from the direction I is received in the reception pit 29 and is stripped of crude dirt with a fine grit having meshes of for instance 6 mm.

From the pit 90, the waste water flows at free hydraulic drop through a pipe 44 (first passage means) and via an inlet situated low, to the tank 10, in which anaerobic conditions prevail. In here the water to be purified is intensely mixed with anoxic sludge and is propelled in the direction B by hydraulic drop and by propeller 16. The first stage of biological dephosphating takes place here and phosphate-rich water is formed.

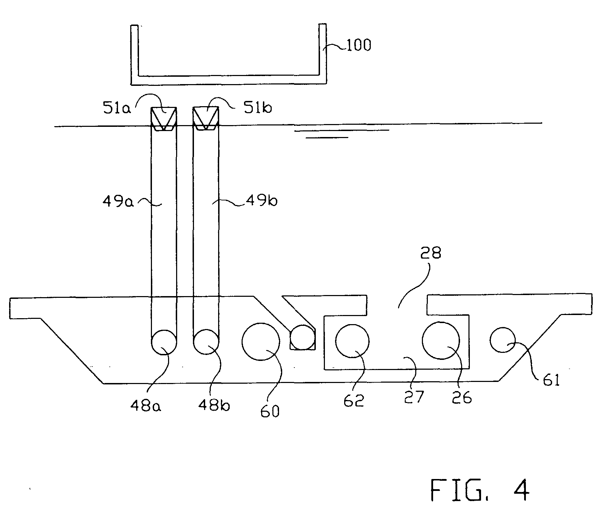

The sludge water mixture in the anaerobic tank 10 flows from below, via an annular aperture 46 and via an overflow in and on a high and transversely placed mixing/supply bowl 45 (third passage means) to a inwardly situated annular tank 11 which forms a contact tank, in which the sludge water mixture is propelled under hydraulic drop and by propeller 17 in the direction C and is intensely brought into contact with return sludge originating from the resettling tank 50. The return sludge is supplied in direction J, via pipe 47 and pumps 84a, b, horizontal pipes 48a, b, (also see figure 4), vertical pipes 49a, b and directional valves in outlet branches 51a, 51b until on the mixing bowl 45. The sludge water mixture not deflecting through the annular aperture 46 flows on, underneath the mixing bowl 45 to make a following circulation. In the contact tank the settling properties of the biological sludge are strongly improved and the sensitivity for occurrence of light sludge decreases.

The sludge water mixture flows at free hydraulic drop through low apertures 23 (fourth passage means) in the wall 6 to an annular anoxic tank 12. In here the sludge water mixture is propelled under free hydraulic drop and by means of propeller 18 in the direction D. The sludge water mixture here is in oxygen-poor yet nitrate containing surroundings, in which phosphate-accumulating bacteria may also absorb large quantities of phosphates from the waste water, in which the nitrate serves as oxygen source for the bacteria. In this way phosphate is extracted from the waste water and held in sludge and nitrates are removed.

In the anoxic tank 12 anoxic sludge is received and is taken to the pit 90 via pump 86 (situated at approximately 1 m below water level) and conduit 87 situated high (fifth passage means) in order to be mixed there with the waste water and then to flow with it through conduit 44 to the anaerobic tank 10.

The inner, cylindrical tank 13 serves as sludge thickener, in which discharge sludge supplied -via conduits that are not shown- from the resettling tank 50, and phosphate sludge possibly formed, originating from phosphate-rich water from the anaerobic tank 10 (this will be gone into later), is thickened by means of settling. Thin fraction can flow back to the anoxic tank 12 via overflows 22.

At the outer side of the wall 4 a selector tank 9 is present. The sludge water mixture flows into the transversely placed discharge bowl 25 situated high, via lower conduit 26 to a vortex pit 27 situated low and from there via supply opening 28 (also see figure 4) in the bottom of the tank 9 into the tank 9 under free hydraulic drop, where anoxic or oxic surroundings can selectively be adjusted. To that end propeller 15 is present and schematically indicated air/gas blowers 55 are arranged to debouch near the bottom of the tank 9. Usually this tank is used as anoxic tank, to which end the aerators 55 have been shut off and the propeller 15 propels the mixture in the direction E. A slow denitrification then takes place and further absorbtion of phosphate.

The outer annular tank 8 forms an oxic tank, in which the sludge water mixture (active sludge mixture) is intensely aerated by means of aerators 56. Nitrogen compounds are converted here into nitrate, the remaining Biochemical Oxygen Demand (BOD) is eliminated and the remaining phosphate is absorbed by the phosphate bacteria. The sludge water flows from the selector tank 9 under free hydraulic drop, via recessed overflow 24 (which together with the parts 25-28 and tank 9 form the sixth passage means) into the tank 8 and circulates there in the direction F, aided by propeller 14.

In the bottom of oxic tank 8 there are two storeys 57 and 58, with in there sludge pumps 59 and 60, with which nitrate-rich sludge can be pumped from the oxic tank 8 to the anoxic tank 12 and the selector tank 8, respectively. The nitrate-rich sludge in the one case goes to an inlet 63 situated low in the bottom of the tank 12 via conduit 61 (seventh passage means). In the other case the nitrate-rich sludge goes through port 62 (eight passage means) to the aforementioned vortex pit 27 in order to be mixed there with the sludge water mixture from the anoxic tank 12.

When there is question of a very high load the aerators 55 are switched on, so that the tank 9 can supplement the operation of the oxic tank 8.

The aerators 55 and 56 do not only introduce oxygen but also ensure turbulence and as a result for additional mixing. Said function is used for the processing of gasses which arise in the anaerobic tank 10, the contact tank 11, the sludge thickener 13 and the reception pit 29. These spaces are covered with floors 64-66 (the one of the reception pit is not shown), in which conduits 71-73 have their inlets in the area above the water surface and below the cover floors and are connected to the blowers for the aerators 56 at the suction side, at least such that they also suction gasses from the aforementioned spaces apart from air from the surroundings. These gasses can then dissolve in the oxic circuit and be absorbed to the sludge flakes. Expensive bio-filters for the gasses are no longer necessary.

The sludge water mixture flows over the edges of transverse gutters 85 and then at free hydraulic drop into pit 80, and flows from there in the direction H, via discharge conduit 81 to the resettling tank 50. After spending time in the resettling tank 50 so-called effluent flows through conduit 82 in the direction K into pit 83 and from there in the direction O to a place of discharge.

For example the reactor 1 can have a diameter in the order of 10 times the water depth of 4 to 10 m.

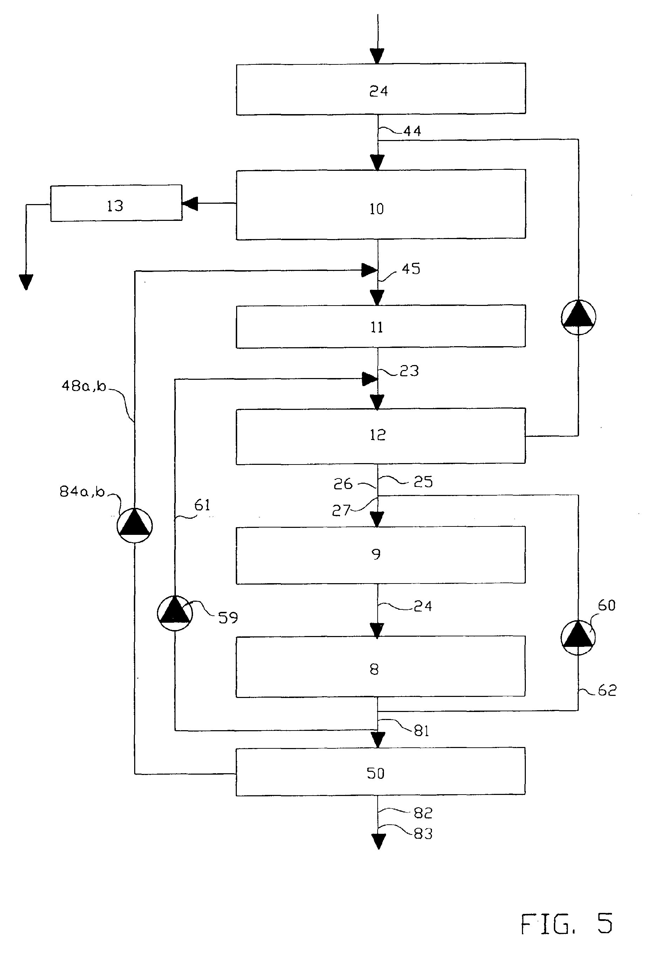

In figure 5 some of the aforementioned flows are shown in a flow chart.

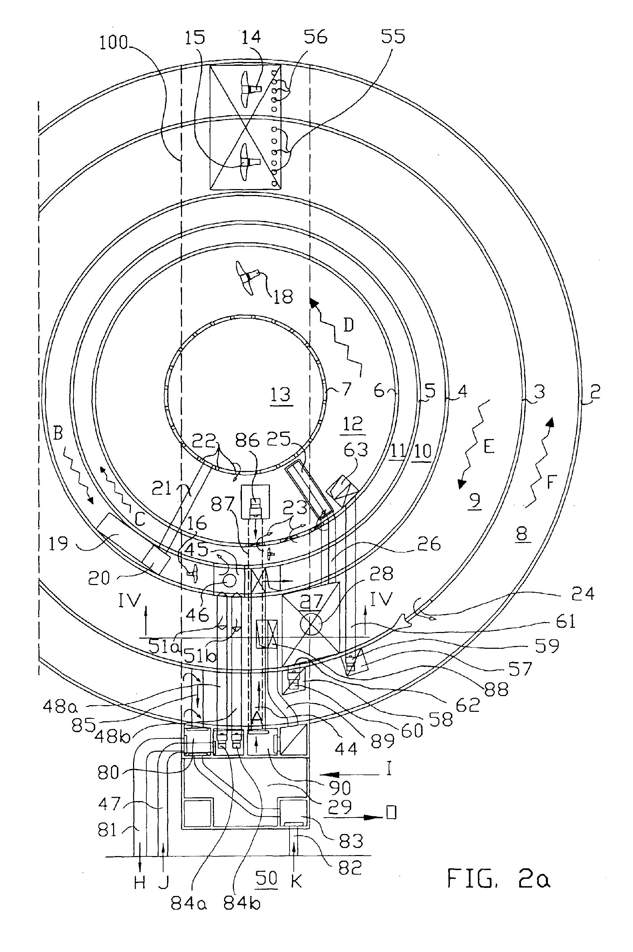

It is also noted that for servicing the following parts can be dewatered: 1) suldge thickener 13; anaerobic tank 10 + contact tank 11 + anoxic tank 12; selector tank 9; and oxic tank 8. To that end closures 51a, 51b are provided, the discharge 88 + conduit 89 and other conduits are provided (also see figures 2 and 2A).

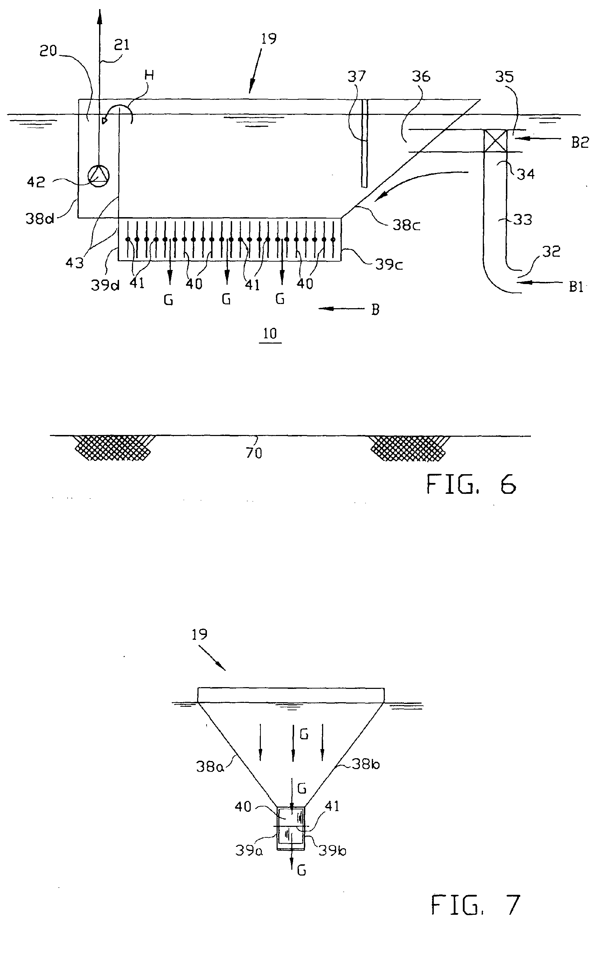

As mentioned above phosphates are released to the water in the anaerobic tank. Said phosphate-rich water is discharged to the sludge thickener 13. According to the invention, for separating phosphate-rich water from the sludge water mixture that is present in the anaerobic tank 10 a two-stage separator 19 is used, which is shown in the figures 6 and 7. The separator 19 is substantially formed by a funnel-shaped bowl having (see the cross-section of figure 7) downwardly inclined side walls 38a, 38b, which at the bottom change into vertical side walls 39a, 39b. The lower end is open. The upstream wall 38c of the separator 19 also runs downwardly inclined and changes into a straight upstream wall 39c. At the downstream side the separator is bounded by a vertical transverse wall 38d, which together with a partition 43 forms a discharge chamber 20, in which a pump 42 has been placed, which is connected to a pressure line 21 which leads to the sludge thickener 13.

An inlet branch 36 extends through the inclined upstream wall 38c, in which inlet branch a valve 35 has been placed which can be adjusted as to position and may possibly be closed. The valve 35 is situated on the crossing of the high inlet 34 and the lower inlet 32, 33, in order to open it at choice. At a short distance behind the inlet branch 36 there is a vertical partition 37, which serves to let the inflowing mixture disturb the remaining liquid present in the separator 19 as little as possible.

In the straight lower portion of the separator 19 a number of laminations 40 are arranged, which are hingeable about transverse axes 41 and can be fixed in a desired inclined position.

As can be seen in figure 6 the lower end of the separator 19 is situated at a distance from the bottom 70 of the anaerobic tank 10. As a result a main flow B of sludge water mixture will continue to be. Tapping off, however, via the inlet 32 or via the inlet 34 can take place from said main flow, in the respective directions B1 and B2. For letting in the mixture the velocity head of the mixture is used. The sludge water mixture which enters the separator 19 will move on in there with relatively very low velocity. As a result the sludge particles are given the opportunity to deposit downward in the direction G (see figure 7), through the laminations 40 until in the main flow B in order to be taken along by it. The laminations 40 ensure that the (disturbing) influence of the main flow B on the mixture present in the separator 19 is minimized. This can be further influenced by adjusting the laminations 40 to a suitable inclined position. As a result also the size of the passage between two consecutive laminations 40 can be adjusted, considering the achievement of a flow over there which is as laminar as possible.

Phosphate-rich water from which the sludge has settled flows over the upper edge of the partition 43 in the discharge chamber 20. The pump 42 is adjusted to such a flow rate for the discharge of the phosphate-rich water, that the water surface within the separator 19 in any case is not lower than the water surface in the tank 10, because otherwise the water from the tank 10 could enter the separator via the open bottom and disturb the settling process.

In general the water depth may be 4-10 meters and the diameter of the device approximately 10 times the water depth.

By way of example the width of the anaerobic tank 10 could be 1.80 m, in which the water depth is approximately 5.5 m. The flow velocity in the tank 10, which usually is approximately 0.30 to 0.40 m/sec, can in the arrangement according to the invention be higher, for instance 0.40 - 0.50 m/sec. The two-stage separator 19 here may have a raised edge of 10 cm, an inclined wall of 0.65 m and a straight lower wall of 0.40 m, so that the total height below the water surface ends up at broadly 1 m. The length of the separator 19 may be approximately 5 m. The pump 42 here is adjusted to a flow rate of 4-10 m³/hour.

The device 1 described above offers many advantages. To mention a few: a higher average water temperature, as a result of which there is less objection to frost and better N-removal at low outside temperature is possible; less loss of energy because of hydraulically favourable theoretical boundary conditions; less reactor surface and therefore more favourable theoretical smell emission; less conduits; build-up E-installation with less cabling in the terrain; less paving of the terrain; more terrain available for future expansion and shorter construction time.

## Claims

1. Device for the purification of waste water, comprising a number of tanks, situated within the circumferential wall of the device and separated from each other by -preferably substantially circular- circumferential walls, the first tank being adapted as anaerobic reactor in which the waste water is mixed with anoxic sludge, a second tank being adapted as contact reactor in which sludge water mixture originating from the anaerobic reactor is mixed with return sludge, and a third tank being adapted as anoxic reactor in which the sludge water mixture is mixed with nitrate-rich sludge, the device further comprising first passage means for supply of waste water to the anaerobic reactor, possibly second passage means for discharge of phosphate-rich water from the anaerobic reactor, third passage means for transferring the sludge water mixture from the anaerobic reactor to the contact reactor, fourth passage means for transferring sludge water mixture from the contact reactor to the anoxic reactor, fifth passage means for transferring anoxic sludge from the anoxic reactor to the anaerobic reactor, the device further comprising a fourth tank within the circumferential wall which tank is adapted as oxic or aerobic reactor in which among others, while aerating, nitrogen compounds in the sludge water mixture originating from the anoxic reactor are converted into nitrate, the device further comprising sixth passage means for transferring sludge water mixture from the anoxic reactor to the oxic reactor, the sixth passage means being substantially accommodated within the circumferential wall of the device.

2. Device according to claim 1, further comprising seventh passage means for transporting nitrate-rich sludge from the oxic reactor to the anoxic reactor, which are substantially accommodated within the circumferential wall of the device.

3. Device according to claim 1 or 2, the sixth passage means comprising a fifth reactor, which is circuited between the anoxic reactor and the oxic reactor and as selector reactor can be deployed at choice as anoxic or oxic reactor.

4. Device according to claim 3, further comprising eighth passage means for transporting nitrate-rich sludge from the oxic reactor to the selector reactor.

5. Device according to claim 4, a vortex pit being accommodated in the bottom of the selector reactor, in which pit the sludge water mixture originating from the anoxic reactor is mixed with the nitrate-rich sludge from the oxic reactor.

6. Device according to any one of the claims, the oxic reactor being situated at the circumference of the device.

7. Device according to claims 3 or 6, the selector reactor being situated at the radial inside of the oxic reactor and being in connection therewith at free hydraulic drop.

8. Device according to any one of the preceding claims, the anaerobic reactor, the contact reactor and the anoxic reactor succeeding each other in radial inward direction, the selector reactor being radially outward adjacent to the anaerobic reactor and the oxic reactor being adjacent thereto in radial outward direction, the first, third, fourth and sixth passage means being active at free hydraulic drop.

9. Device according to any one of the preceding claims, further comprising a sixth tank being adapted as sludge thickener and being connected to the second passage means.

10. Device according to claim 9, the sludge thickener being situated in the centre of the device, in radial inward direction next to the anoxic reactor and being connected thereto via an overflow for phosphate-poor water.

11. Device according to any one of the preceding claims, further provided with a discharge for sludge water from the oxic reactor to a resettling tank.

12. Device according to any one of the preceding claims, the contact reactor being provided with a supply and mixing bowl in which the sludge water mixture originating from the anaerobic reactor is mixed with return sludge originating from a resettling tank.
